Europäisches Patentamt

European Patent Office

Office européen des brevets

(19)

(11) Veröffentlichungsnummer: **0 199 068**
**A1**

(12) # EUROPÄISCHE PATENTANMELDUNG

(21) Anmeldenummer: **86103499.9**

(51) Int. Cl.⁴: **G 11 B 15/60**

(22) Anmeldetag: **14.03.86**

(30) Priorität: **23.04.85 DE 3514592**

(43) Veröffentlichungstag der Anmeldung:
**29.10.86 Patentblatt 86/44**

(84) Benannte Vertragsstaaten:
**DE FR GB IT**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Zöllner, Rainer**
**Birkenweg 4**
**D-8501 Dietenhofen(DE)**

(54) Vorrichtung zur Führung eines Magnetbandes über Bandführungsrollen in einem Videomagnetbandgerät.

(57) Es wird eine Vorrichtung zur Führung eines Magnetbandes (1) in einem Videogerät beschrieben, bei der die Bandführungsrollen (4, 6) verschiebbar und drehbar auf zugeordneten Bandführungsstiften (18, 18") angeordnet sind, und das Magnetband (1) aus einer Bandkassette (2) herausziehen und teilweise in Schrägspurführung um die Kopftrommel (3) legen. Den Bandführungsrollen (4, 6) ist hierzu je ein Stellteil (20) zugeordnet, das in eine Führung eines Führungszylinders (7) eingreift, und die Höhenlage der Bandführungsrolle beim Herausziehen oder Zurückführen des Magnetbandes (1) aus der oder in die Kassette (2) verändert.

FIG. 1

EP 0 199 068 A1

- 3 -

## VORRICHTUNG ZUR FÜHRUNG EINES MAGNETBANDES ÜBER BANDFÜHRUNGSROLLEN IN EINEM VIDEO-MAGNETBANDGERÄT

### BESCHREIBUNG

Die Erfindung betrifft eine Vorrichtung entsprechend dem Oberbegriff des Anspruchs 1.

Es sind magnetische Aufzeichnungs- und/oder Wiedergabegeräte bekannt, die insbesondere als Video-Magnetbandgerät mit Schrägspuraufzeichnung arbeiten, und bei denen das Magnetband bekannter Weise um eine rotierende Kopftrommel geführt wird. Zur Erzielung einer wenigstens teilweisen Umschlingung einer Kopftrommel mit einem Magnetband werden bewegliche Bandführungsstifte verwendet. Das Magnetband wird hierbei aus einer Bandkassette mit zwei Bandwickelspulen herausgezogen und in Schräglage um einen Teil der Kopftrommel gelegt. Hierfür sind bei bekannten Bandführungsvorrichtungen die Bandführungsstifte auf einem ringförmigen Träger angeordnet.

- 4 -

Der Träger ist um die Kopftrommel gelegt und getrennt antreibbar. Da das Magnetband schräg über die Kopftrommel geführt ist,
erfordert die unterschiedliche Höhenlage des Magnetbandes eine
entsprechende Höhenanpassung der Bandführungsstifte an die
Bandlage im Bereich der Kopftrommel. Erreicht wird dies bekannter Weise dadurch, daß sich das Magnetband an den Führungsstiften auf und ab bewegen kann. Hierdurch ergeben sich teilweise
unerwünschte Bandhöhenverschiebungen. Bekannt ist weiterhin, daß
anstelle eines ringförmigen Trägers ein Führungsschlitz verwendet wird, in dem bereits die Führungsstifte höhenmäßig veränderbar geführt sind. Der Antrieb eines derartig geführten Führungsstiftes ist jedoch aufwendiger gegenüber dem Antrieb durch einen
ringförmigen Träger, der sich nur in einer Ebene bewegt. Eine
höhenveränderbare Bandführung ermöglicht jedoch die Verwendung
von Bandführungsstiften, die das Band höhenbestimmend zwischen
zwei Seitenflansche  führen.

Aufgabe der Erfindung ist es daher, eine Kombination zur Führung
eines Magnetbandes bei Video-Magnetbandgeräten zu finden, die
den Antrieb der Bandführungsstifte in einfacher Weise durch
einen bekannten ringförmigen Träger gestattet und trotzdem ermöglicht, daß das Magnetband über Führungsstifte, die beidseitig
einen Flansch aufweisen, höhenbestimmend geführt wird.

Diese Aufgabe wird erfindungsgemäß durch die im Kennzeichen des
Patentanspruchs 1 angegebenen Merkmale gelöst.

Die Erfindung wird nachfolgend anhand der Zeichnungen näher erläutert.

Fig. 1    ist eine perspektivische Teildarstellung
         eines Video-Magnetbandgerätes mit einer
         Vorrichtung zur Führung eines Magnetban-
         des mittels Bandführungsrollen, die auf
         einem Bandführungsstift verschiebbar an-
         geordnet sind,

Fig. 2    ist eine vergrößerte Teilansicht einer
         Band-Führungsrolle, die über ein Stell-
         teil in eine Führung eines Führungs-
         zylinders eingreift.

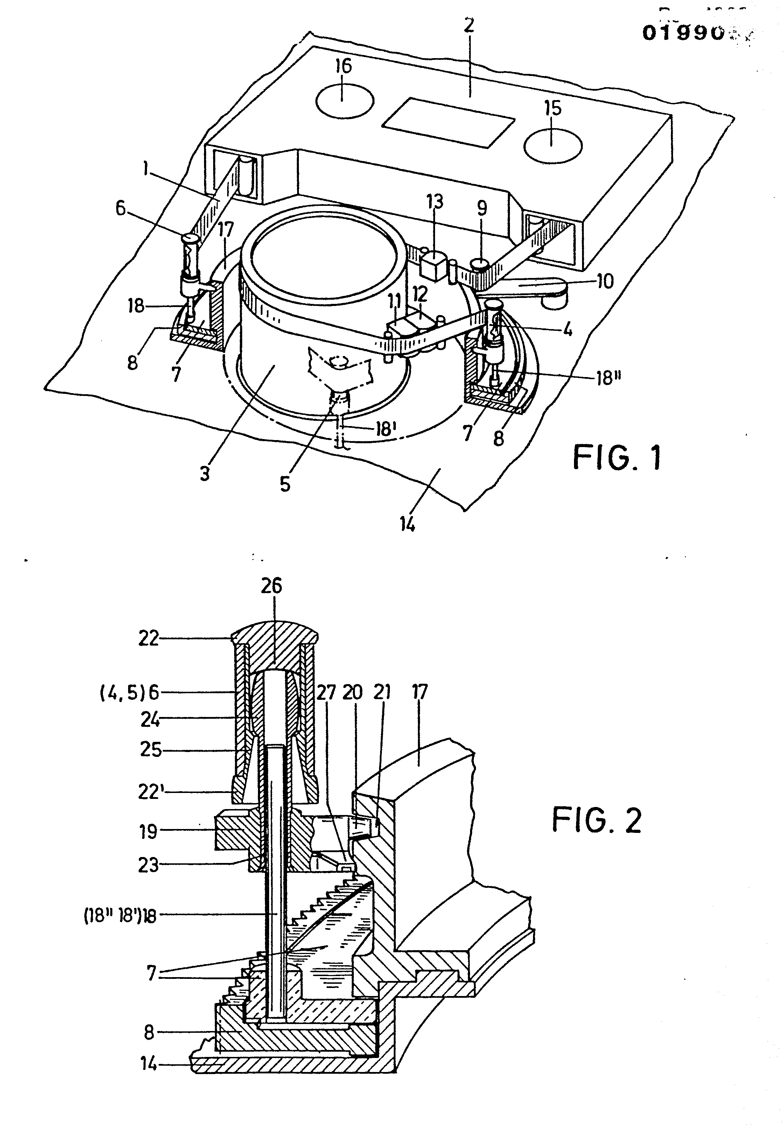

Aus der Figur 1 ist zu erkennen, wie ein Magnetband 1 aus
einer Bandkassette 2 herausgezogen um eine Kopftrommel 3
eines nicht näher dargestellten Video-Magnetbandgerätes
gelegt ist. Das Magnetband 1 wird zum Herausziehen aus der
Kassette von mehreren Bandführungsrollen 4, 5, 6 erfaßt.
Die Führungsrollen sind hierzu auf einem oder mehreren antreibbaren ringförmigen Trägern 7 und 8 angeordnet. Die in
der Zeichnung dargestellte Bandführung weist noch ein nicht
auf den ringförmigen Trägern angeordnetes Bandführungselement 9 auf.  Dieses Bandführungselement ist auf einem getrennt schwenk- und steuerbaren Hebel 10 angeordnet. Nahe
der Kopftrommel befinden sich zwei feststehende Audioköpfe
11, 12 und ein Löschkopf 13, der ebenfalls wie die übrigen
Köpfe auf einem in der Zeichnung lediglich angedeuteten
Chassis 14 fest montiert ist. Eine für den Bandantrieb
erforderliche Capstanwelle mit Bandandruckrolle ist zur
Vereinfachung des Bandlaufschemas nicht in der Zeichnung dargestellt. Ebenfalls nicht dargestellt sind die in der
Kopftrommel befindlichen und mit einem Teil dieser rotierenden Videoköpfe. In der Kassette 2 befinden sich bekannter Weise zwei nebeneinander angeordnete Bandspulen 15, 16,
die über Antriebsmittel antreibbar sind. Die Kopftrommel 3
ist von einem Führungszylinder 17 umgeben, der zur Höhenführung der Bandführungsrollen 4, 5, 6 vorgesehen ist. Um
eine bessere Darstellung des Führungszylinders zur Höhenführung der Führungsrollen zu ermöglichen, ist in der Zeichnung
das Chassis und der Führungszylinder aufgebrochen gezeichnet.
Somit ist durch einen darstellbaren Querschnitt am Führungs-
Zylinder der Eingriff einer Führungsrolle sichtbar gemacht.
Eine Verdeutlichung dieser Eingriffsdarstellung ist in vergrößerter Form durch die Figur 2 gegeben.

Die Figur 2 zeigt eine Teilansicht im Schnitt des Führungszylinders 17, der auf dem Chassis 14 montiert ist und dem
die beiden ringförmigen Träger 7 und 8 zugeordnet sind. Mindestens einer der beiden Träger ist über einen Stellmotor
antreibbar und nimmt über eine Mitnahmeeinrichtung den zweiten Träger verzögert mit. In den Träger 7 ist wenigstens ein
Führungsstift 18 eingepreßt. Auf dem Führungsstift ist eine
Bandführungsrolle 6 höhenverschiebbar aufgesteckt. Der Bandführungsrolle 6 ist ein Stellteil 19 zugeordnet, das eine
Führungsnase 20 aufweist, die in eine Führung 21 des Führungszylinders 17 eingreift. Die Ebene der Führung 21 ändert sich
zur Ebene der Träger 7 und 8 in Abhängigkeit zu der sich
ändernden Magnetband-Höhenlage zur Kopftrommel. Hierdurch wird das Stellteil 19 und somit die Führungsrolle 6 in der
Höhe auf dem Führungsstift 18 verschoben. Nach der Darstellung in der Zeichnung ist die Führungsrolle 6 taumelbar auf
dem Stellteil 19 gelagert. Die Führungsrolle 6 weist beidseitig einen das Magnetband randseitig erfassenden Flasch 22
und 22' auf. In das Stellteil 19 ist eine Buchse 23 eingedrückt,
die im oberen Bereich ein Kalottenteil 24 aufweist. Das Stellteil ist bei einer derartigen Konstruktion über die Buchse
verschiebbar auf den Führungsstift 18 aufgesetzt. Zur Anpassung des inneren Teils der Führungsrolle 6 an das Kalottenteil 24  am Stellteil 19, ist der Flansch 22' mit einem Lagerhals 25  versehen, der sich an die Kalotte beweglich anschmiegt.
Der andere Flansch 22 ist mit einem Zapfen 26 versehen, der als
Verschlußteil der Führungsrolle ausgebildet ist. Zur Drehsicherung des Stellteils 19 ist unterhalb und beidseitig der Führungsnase 20 ein am Führungszylinder sich abstützender Gleitschuh 27
am Stellteil 19 angebracht. Die Fixierung einer taumelbaren und
einer nicht taumelbaren Führungsrolle auf dem Stellteil 19 kann
auch durch andere bekannte konstruktive Maßnahmen erreicht werden.

0199068

VORRICHTUNG ZUR FÜHRUNG EINES MAGNETBANDES
ÜBER BANDFÜHRUNGSROLLEN IN EINEM VIDEO-MAGNETBANDGERÄT

PATENTANSPRÜCHE

1. Vorrichtung zur Führung eines Magnetbandes über
Bandführungsrollen in einem Video-Magnetbandgerät, bei dem
das Magnetband aus einerBandkassette mit nebeneinander angeordneten Bandspulen herausgezogen in Schrägspurführung
eine drehbare Kopftrommel teilweise umschlingt, und die
Bandführungsrollen auf Führungsstiften aufgesetzt sind, wobei die Führungsstifte auf einem oder mehreren sich um die
Kopftrommel drehenden ringförmigen Trägern angeordnet sind,
d a d u r c h   g e k e n n z e i c h n e t ,   daß die
Bandführungsrollen (6/4, 5) verschiebbar und drehbar auf den
zugeordneten Führungsstiften (18/18', 18") gelagert sind,
daß ein Stellteil (19) mit einer Führungsrolle (6) gekoppelt auf einem Führungsstift (18) verschiebbar gelagert
ist, und daß das Stellteil in eine Führung (21) eines Führungszylinders (17) eingreift und die Führungsrolle in beliebiger Lage zur Kopftrommel (3) höhenverschiebbar ist.

- 2 -

- 2 -

2. Vorrichtung nach Anspruch 1, d a d u r c h g e k e n n z e i c h n e t , daß bedarfsweise ein oder mehrere Führungsrollen (4, 5, 6) taumelbar auf dem Stellteil (19) gelagert sind.

3. Vorrichtung nach Anspruch 1 oder 2, d a - d u r c h g e k e n n z e i c h n e t , daß die Führungsrolle beidseitig zur Führung des Magnetbandes einen Flansch (22, 22') aufweist.

4. Vorrichtung nach einem der bisherigen Ansprüche, d a d u r c h g e k e n n z e i c h n e t , daß das Stellteil (19) eine Buchse (23) mit einem Kalottenteil (24) aufweist, über das die Führungsrolle (6) taumelbar aufgesteckt ist.

- 3 -                                    Beschreibung:

FIG. 1

FIG. 2

## EUROPÄISCHER RECHERCHENBERICHT

| | EINSCHLÄGIGE DOKUMENTE | | EP 86103499.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE - A1 - 2 916 895 (PHILIPS')<br>* Fig. 2; Ansprüche 1-5 *<br>-- | 1,3 | G 11 B 15/60 |
| A | DE - A1 - 2 916 851 (PHILIPS')<br>* Fig. 1-6; Ansprüche 1-9 *<br>-- | 1 | |
| A | DE - A1 - 3 217 762 (BOSCH)<br>* Fig. 1,2; Zusammenfassung *<br>-- | 1,2 | |
| A | DE - A1 - 3 248 706 (BELL)<br>* Fig. 1; Zusammenfassung *<br>-- | 1,2 | |
| A | EP - A2 - 0 057 409 (BISCHL)<br>* Fig. 1; Zusammenfassung *<br>---- | 1,3 | |

| | RECHERCHIERTE SACHGEBIETE (Int. Cl.4) |
|---|---|
| | G 11 B 15/00<br>G 11 B 5/00<br>B 65 H 27/00 |

Der vorliegende Recherchenbericht wurde für alle Patentansprüche erstellt.

| Recherchenort | Abschlußdatum der Recherche | Prüfer |
|---|---|---|
| WIEN | 01-08-1986 | BERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82